# EUROPÄISCHE PATENTANMELDUNG

(11) **EP 2 966 725 A1**
(43) Veröffentlichungstag der Anmeldung: **13.01.2016**
(21) Anmeldenummer: 15002062.6
(22) Anmeldetag: 10.07.2015
(51) Int. Cl.: H01Q 1/32, H01Q 1/42, H01Q 15/08, H01Q 19/06, H01Q 1/22, H01Q 23/00

(54) **RADOM FÜR EINE RADARSENSOREINRICHTUNG MIT WENIGSTENS ZWEI RADARSENSOREN UND RADARSENSOREINRICHTUNG**

(30) Priorität: 12.07.2014 DE 102014010383
(71) Anmelder: AUDI AG, 85045 Ingolstadt (DE)
(72) Erfinder: Khlifi, Rachid, DE - 85748 Garching (DE)
(74) Vertreter: Thielmann, Frank

(57) **Zusammenfassung**

Radom (13) für eine Radarsensoreinrichtung (2) mit wenigstens zwei Radarsensoren (7, 8), die auf einer gemeinsamen Leiterplatte (5) in CMOS-Technologie realisiert sind, wobei das einstückige Radom (13) unterschiedlich wirkende Radaroptikabschnitte (14, 15) für unterschiedliche Radarsensoren (7, 8) aufweist.

## Beschreibung

Die Erfindung betrifft ein Radom für eine Radarsensoreinrichtung mit wenigstens zwei Radarsensoren, die auf einer gemeinsamen Leiterplatte in CMOS-Technologie realisiert sind. Daneben betrifft die Erfindung eine Radarsensoreinrichtung mit einem solchen Radom und ein Kraftfahrzeug mit einer solchen Radarsensoreinrichtung.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Gezeigt hat sich, dass eine vom Aufwand her realisierbare Hochintegration, insbesondere also die Realisierung einer Antenne im Package mit einem Radarchip, der die sonstigen Komponenten des Radar-Frontends enthält, erst mit der Verfügbarkeit der CMOS-Technologie tatsächlich gegeben ist.

Bei heute bekannten Radarsensoren spielt das Radom eine wichtige Rolle. Mit dem Wort Radom (kurz für "radar dome") wird üblicherweise die Abdeckung bezeichnet, die die Antennenanordnung des Radarsensors vor äußeren mechanischen und chemischen Einflüssen, beispielsweise vor Wind oder Regen, schützt. Das Radom ist dabei üblicherweise für Radarwellen durchlässig gestaltet, besteht mithin aus einem geeigneten Hochfrequenzmaterial (HF-Material). Durch die Form des Radoms können Detektionseigenschaften des Radarsensors beeinflusst werden, insbesondere der Öffnungswinkel des Erfassungsbereichs und die Reichweite des Radarsensors. Wird beispielsweise ein komplett flaches Radom verwendet, ergibt sich ein großer Öffnungswinkel, jedoch eine reduzierte Reichweite, da durch die zwei auftretenden Grenzflächen keine tatsächliche Beeinflussung des Radarsignals auftritt. Wird jedoch beispielsweise ein halbkugelförmig ausgewölbtes Radom verwendet, ergibt sich durch die gekrümmte äußere Grenzfläche ein Linseneffekt, der zwar den Öffnungswinkel reduziert, jedoch die Reichweite erhöht, da die Radarstrahlung auf einen kleineren Bereich fokussiert wird.

Je nach der Anwendung, für die der Radarsensor geschaffen ist, wird er entweder mit einem flachen oder mit einem halbkugelförmigen Radom betrieben, das dem entsprechenden Radar-Frontend zugeordnet ist. Mithin wird der Fokus bezüglich eines Radarsensors entweder auf eine größere Reichweite oder auf einen größeren Öffnungswinkel gelegt. Häufig besteht jedoch der Wunsch, ausgehend vom im Wesentlichen gleichen Ort Radardaten sowohl mit größerem Öffnungswinkel als auch mit größerer Reichweite zu erhalten. Dies ist bei den heute vorgegebenen festen Radoms nicht möglich.

Der Erfindung liegt daher die Aufgabe zugrunde, eine Radarsensoreinrichtung anzugeben, die auf einfache Art und Weise unterschiedliche Detektionseigenschaften umsetzt.

Zur Lösung dieser Aufgabe ist erfindungsgemäß ein Radom für eine Radarsensoreinrichtung mit wenigstens zwei Radarsensoren, die auf einer gemeinsamen Leiterplatte in CMOS-Technologie realisiert sind, derart ausgestaltet, dass das einstückige Radom unterschiedlich wirkende Radaroptikabschnitte für unterschiedliche Radarsensoren aufweist.

Erfindungsgemäß wird also vorgeschlagen, die durch die CMOS-Technologie mögliche Hochintegration zu nutzen, insbesondere also die Existenz von Packages, die die Antennenanordnung und einen wenigstens den Radar-Transceiver realisierenden CMOS-Chip enthalten und wenig beabstandet auf einer gemeinsamen Leiterplatte realisiert werden können, um eine Radarsensoreinrichtung zu schaffen, die durch ein spezielles einstückiges Radom unterschiedliche Detektionseigenschaften bei großer baulicher Nähe ermöglicht. Dadurch, dass die Radarsensoren selbst äußerst kleinbauend und dicht gepackt realisiert werden können, ist es möglich, ein einstückiges Radom für die Radarsensoreinrichtung kostengünstig und aufwandsarm herzustellen, welches Radaroptikabschnitte für die unterschiedlichen Radarsensoren aufweist, die unterschiedliche Detektionseigenschaften der einzelnen Radarsensoren definieren.

Auf diese Weise wird es insbesondere ermöglicht, die mehreren Radarsensoren auf einer Leiterplatte mit unterschiedlichen Detektionseigenschaften zu realisieren, ohne dass sie selbst unterschiedlich sein müssen oder unterschiedlich betrieben werden müssten. Beispielsweise kann das Radom einen Radaroptikabschnitt für die Erfassung im fernen Bereich und einen Radaroptikabschnitt für die Erfassung im Nahbereich aufweisen, so dass zwei ansonsten vollständig gleiche Radarsensoren unterschiedliche Radareigenschaften durch das Vorsehen des einstückigen, einfach herstellbaren Radoms erhalten.

Vorzugsweise ist das Radom dabei massiv, das bedeutet, es besteht durchgehend aus einem für Radarstrahlung durchlässigen Material, so dass die unterschiedlichen Detektionseigenschaften durch die Grenzflächen des Radoms realisiert werden. Grundsätzlich ist es für komplexere Radaroptikabschnitte jedoch auch denkbar, eine größere Anzahl von Grenzflächen durch eine hohle Ausbildung des Radoms zu realisieren, was jedoch hinsichtlich der Herstellung weniger bevorzugt ist.

Eine konkrete Ausgestaltung der vorliegenden Erfindung sieht vor, dass das Radom wenigstens einen flachen Radaroptikabschnitt und wenigstens einen nach außen gewölbten Radaroptikabschnitt aufweist. Dabei kann die Wölbung des gewölbten Radaroptikabschnitts insbesondere halbkugelförmig sein. Weist die Radarsensoreinrichtung zwei Radarsensoren auf, kann das Radom in dem ersten Radaroptikabschnitt mit der Auswölbung einen Linseneffekt ausüben, mithin den Öffnungswinkel des Erfassungsbereichs reduzieren, jedoch die Reichweite steigern. Für den anderen Radarsensor kann ein Radaroptikabschnitt geschaffen werden, der flach ist und somit einen größeren Öffnungswinkel und eine reduzierte Reichweite realisiert. Die hier genannten Radaroptikabschnitte sind selbstverständlich beispielhaft zu verstehen, es sind grundsätzlich auch andere Formen, beispielsweise nach innen gewölbte Oberflächen, denkbar.

Es kann vorgesehen sein, dass das Radom aus einem Hochfrequenzmaterial, insbesondere umfassend Polypropylen, besteht. Wesentlich hierbei ist, dass das Hochfrequenzmaterial für Radarstrahlung möglichst durchlässig ist, mithin einen hohen Transmissionskoeffizienten aufweist. Als geeignetes Material hierfür hat sich Polypropylen bzw. eine Polypropylenmischung erwiesen, die auch für Stoßfänger von Kraftfahrzeugen häufig eingesetzt wird. In diesem Kontext ist es ferner zweckmäßig, wenn das Radom in einem Gussverfahren hergestellt ist. Das einstückige Radom, welches, wie dargestellt, bevorzugt ohnehin massiv ohne Hohlräume ist, kann durch Bereitstellung einer geeigneten Form in einem Gussverfahren auf einfache und kostengünstige Weise hergestellt werden.

Neben dem Radom betrifft die vorliegende Erfindung auch eine Radarsensoreinrichtung mit wenigstens zwei Radarsensoren, die auf einer gemeinsamen Leiterplatte in CMOS-Technologie realisiert sind, und mit einem erfindungsgemäßen Radom. Sämtliche Ausführungen bezüglich des Radoms lassen sich analog auf die Radarsensoreinrichtung übertragen, mit welcher mithin die bereits genannten Vorteile erhalten werden. Dabei kann das Radom beispielsweise als Abdeckung unmittelbar über der Leiterplatte in Aussenderichtung vorgesehen werden, welche wiederum in einem Gehäuse gehaltert ist, das das Radom abschließt, möglich ist es jedoch selbstverständlich auch, das Radom insgesamt als Gehäuse für die Leiterplatte zu definieren, welches mithin die Leiterplatte aufnimmt und in Ausstrahlungsrichtung die Radaroptikabschnitte aufweist.

Dabei ist es besonders bevorzugt, wenn jeder Radarsensor einen auf der Leiterplatte angeordneten CMOS-Chip aufweist, durch den ein Radar-Transceiver realisiert ist, wobei die hierdurch erreichte Hochintegration noch verbessert werden kann, wenn durch den Chip auch eine digitale Signalverarbeitungskomponente und/oder eine Steuereinheit des jeweiligen Radarsensors realisiert sind. Besonders bevorzugt ist es jedoch, wenn eine Antennenanordnung des jeweiligen Radarsensors in einem Package mit dem CMOS-Chip realisiert ist. Wie bereits dargelegt wurde, ist es dann möglich, die Packages auf der Leiterplatte äußerst dicht aneinander anzuordnen, so dass auch die Radarsensoreinrichtung und das Radom äußerst kleinbauend realisiert werden können. Eine in einem CMOS-Chip realisierte digitale Signalverarbeitungskomponente (DSP) kann für eine Vorauswertung der Daten sorgen, welche dann über die Steuereinheit beispielsweise bereits aufbereitet als Objektliste weitergegeben werden können.

Dabei ist selbstverständlich vorgesehen, dass die jeweiligen Radaroptikabschnitte eine bzw. die Antennenanordnung des Radarsensors in Ausstrahlrichtung wenigstens im Sendeanteil überdecken. Auf diese Weise tritt der strahlführende Effekt der Radaroptikabschnitte ein.

Zweckmäßig ist es, wenn auf der Leiterplatte ferner eine gemeinsame Steuereinrichtung für die Radarsensoren vorgesehen ist. Werden die Radarsensoren im gleichen Frequenzband betrieben, kann die Steuereinrichtung beispielsweise auswählen, welche Radarsensoren zu bestimmten Zeitpunkten betrieben werden sollen und beispielsweise die Radarsensoren alternierend betreiben, bzw. in Abhängigkeit von empfangenen Anforderungen eines Steuergeräts eines Kraftfahrzeugs im bestimmten Zeitraum auch nur einen der Radarsensoren oder eine Untermenge der Radarsensoren betreiben. Bevorzugt ist es jedoch, wenn die Radarsensoren in unterschiedlichen, vorzugsweise aber benachbarten Frequenzbändern betrieben werden. Es sei darauf hingewiesen, dass die Steuereinrichtung, falls Betriebsparameter der Radarsensoren veränderbar sind, selbstverständlich auch zur Einstellung derselben genutzt werden kann, beispielsweise um Radarsensoren bei unterschiedlichen Frequenzbandbreiten zu betreiben, falls diese nicht ohnehin auf unterschiedliche Frequenzbandbreiten eingestellt sind.

Eine vorteilhafte Ausgestaltung der Erfindung sieht jedoch auch vor, dass die Radarsensoren gleich betreibbar sind, so dass unterschiedliche Detektionseigenschaften durch das Radom definiert werden. Die Radarsensoren können also nicht nur gleich ausgebildet sein, es ist auch möglich, diese bezüglich ihrer Detektionseigenschaften gleich zu betreiben, so dass die Unterschiede in den Detektionseigenschaften nur durch das Radom bestimmt sind und mithin eine besonders einfache Herstellung und Konstruktion gegeben ist, da für einzelne Radarsensoren keine Besonderheiten zu beachten sind, sondern einfach mehrmals derselbe Radarsensor auf der Leiterplatte vorgesehen werden kann. Gegebenenfalls, insbesondere dann, wenn die Frequenzbänder der einzelnen Radarsensoren nicht überlappen, kann dann auch eine Steuereinrichtung gänzlich entfallen.

Schließlich betrifft die Erfindung auch ein Kraftfahrzeug, aufweisend wenigstens eine erfindungsgemäße Radarsensoreinrichtung. Die kleinbauend realisierte und unterschiedliche Detektionseigenschaften vom selben Ausgangspunkt ermöglichende Radarsensoreinrichtung lässt sich also besonders vorteilhaft in einem Kraftfahrzeug einsetzen, so dass beispielsweise mit einer einzigen, kleinbauenden Radarsensoreinrichtung Daten aus einem Fernbereich und einem Nahbereich erhalten werden können, wobei sich die Detektionsrichtungen im Wesentlichen entsprechen. Sämtliche Ausführungen bezüglich des Radoms und der Radarsensoreinrichtung lassen sich selbstverständlich analog auf das erfindungsgemäße Kraftfahrzeug übertragen.

Die Radardaten der Radarsensoreinrichtung können in einem einen Fahrzeugsystem zugeordneten Steuergerät verarbeitet werden, beispielsweise in längsführenden Fahrerassistenzsystemen oder dergleichen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs, und
- Fig. 2: eine erfindungsgemäße Radarsensoreinrichtung.

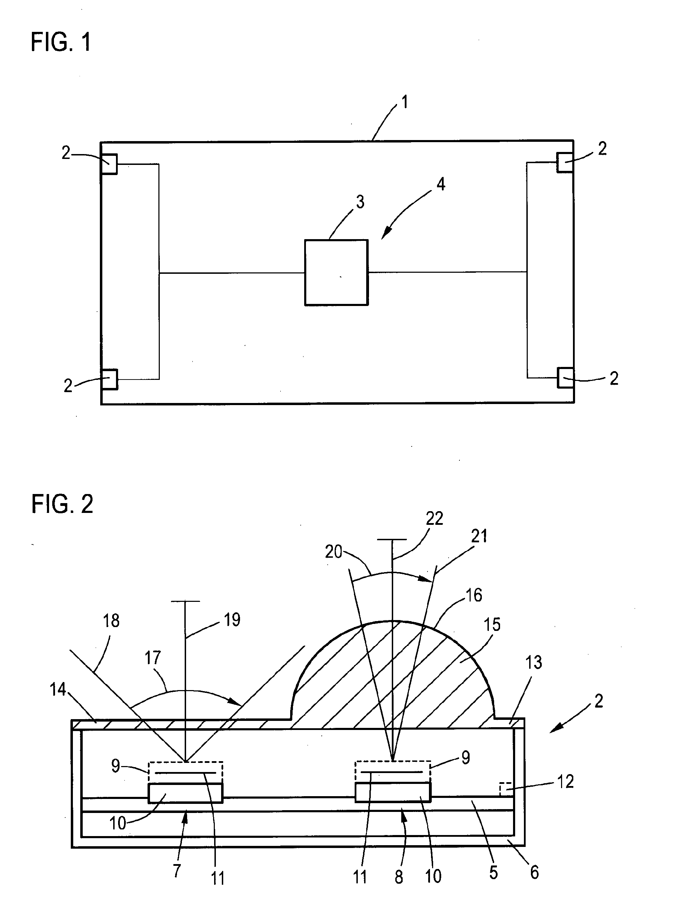

Fig. 1 zeigt eine Prinzipskizze eines erfindungsgemäßen Kraftfahrzeugs 1. Das Kraftfahrzeug 1 weist vorliegend vier erfindungsgemäße Radarsensoreinrichtungen 2 auf, die auf den Bereich vor und hinter dem Kraftfahrzeug 1 gerichtet sind. Die Radardaten der Radarsensoreinrichtungen 2 werden an wenigstens ein Steuergerät 3 des Kraftfahrzeugs 1 weitergeleitet, das wenigstens einem Fahrzeugsystem 4 zugeordnet ist.

Fig. 2 zeigt nun genauer den Aufbau einer erfindungsgemäßen Radarsensoreinrichtung 2. Kernstück der Radarsensoreinrichtung 2 bildet eine Leiterplatte 5, die vorliegend in einem Gehäuse 6 gehaltert ist. Auf der Leiterplatte 6 sind zwei Radarsensoren 7, 8 angeordnet, die vorliegend baugleich realisiert sind. Jeder der Radarsensoren 7, 8 umfasst ein Package 9 in CMOS-Technologie, in dem ein CMOS-Chip 10 und eine Antennenanordnung 11 realisiert sind. Jeder der CMOS-Chips 10 realisiert dabei einen Radar-Transceiver, eine digitale Signalverarbeitungskomponente und eine Steuereinheit. Das bedeutet, die Radarsensoren 7, 8 sind äußerst kleinbauend und hochintegriert realisiert. Als zusätzliche Komponente kann optional auf der Leiterplatte 5 auch eine hier nur angedeutete Steuereinrichtung 12 vorgesehen sein, die beispielsweise die Zeiträume des Betriebs der Radarsensoren 7, 8 steuert, falls diese in überlappenden oder gleichen Frequenzbändern betrieben werden.

Vorliegend ist ein bezüglich der Detektionseigenschaften unterschiedlicher Betrieb jedoch nicht notwendig, da die unterschiedlichen Detektionseigenschaften durch ein erfindungsgemäßes Radom 13 realisiert werden, das an das Gehäuse 6 anschließt und somit einen geschlossenen Raum für die Leiterplatte 5 bietet. Das Radom 13 weist zwei Radaroptikabschnitte 14, 15 auf, wobei der dem Radarsensor 7 zugeordnete Radaroptikabschnitt 14 zwei ebene Flächen realisiert, in dem Radarsensor 8 zugeordneten Radaroptikabschnitt 15 jedoch eine Auswölbung 16 vorsieht, um eine gebogene äußere Grenzfläche zu erreichen. Ansonsten ist das einstückige Radom 13 massiv ausgebildet und in einem Gussverfahren hergestellt worden. Es besteht aus einem Hochfrequenzmaterial, hier einer Polypropylen-Mischung, die auch für Stoßfänger des Kraftfahrzeugs 1 verwendet wurde. Es ist somit für Radarstrahlung durchlässig.

Nachdem die Radaroptikabschnitte den Sendeanteil der jeweiligen Antennenanordnungen 11 überdecken, wirken die Grenzflächen auf die austretenden Radarsignale. Im Radaroptikabschnitt 14 ergibt sich hierdurch ein großer Öffnungswinkel 17 des angedeuteten Erfassungsbereichs 18, jedoch eine eher geringe Reichweite 19. Die Linsenwirkung der Auswölbung 16 sorgt für einen schmaleren Öffnungswinkel 20 des ebenso angedeuteten Erfassungsbereichs 21, jedoch für eine höhere Reichweite 22.

Mithin sind zwei Radarsensoren 7, 8 mit unterschiedlichen Detektionseigenschaften geschaffen, auch wenn beide gleich betrieben werden.

## Patentansprüche

1. Radarsensoreinrichtung (2) mit wenigstens zwei Radarsensoren (7, 8), die auf einer gemeinsamen Leiterplatte (5) in CMOS-Technologie realisiert sind und mit einem Radom (13), wobei das einstückige Radom (13) unterschiedlich wirkende Radaroptikabschnitte (14, 15) für die unterschiedlichen Radarsensoren (7, 8) aufweist.

2. Radarsensoreinrichtung nach Anspruch 1,
**dadurch gekennzeichnet,**
**dass** das Radom (13) wenigstens einen flachen Radaroptikabschnitt (14) und wenigstens einen nach außen gewölbten Radaroptikabschnitt (15) aufweist.

3. Radarsensoreinrichtung nach Anspruch 1 oder 2,
**dadurch gekennzeichnet,**
**dass** das Radom (13) aus einem Hochfrequenzmaterial, insbesondere aus Polypropylen, besteht und/oder in einem Gussverfahren hergestellt ist.

4. Radarsensoreinrichtung nach einem der vorangehenden Ansprüche,
**dadurch gekennzeichnet,**
**dass** jeder Radarsensor (7, 8) einen auf der Leiterplatte (5) angeordneten CMOS-Chip (10) aufweist, durch den ein Radar-Transceiver realisiert ist.

5. Radarsensoreinrichtung nach Anspruch 4,
**dadurch gekennzeichnet,**
**dass** durch den Chip (10) auch eine digitale Signalverarbeitungskomponente und/oder eine Steuereinheit des jeweiligen Radarsensors (7, 8) realisiert sind und/oder eine Antennenanordnung (11) des jeweiligen Radarsensors (7, 8) in einem Package (9) mit dem CMOS-Chip (10) realisiert ist.

6. Radarsensoreinrichtung nach einem der vorangehenden Ansprüche,
**dadurch gekennzeichnet,**
**dass** die jeweiligen Radaroptikabschnitte (14, 15) eine bzw. die Antennenanordnung (11) des Radarsensors (7, 8) in Ausstrahlrichtung wenigstens im Sendeanteil überdecken.

7. Radarsensoreinrichtung nach einem der vorangehenden Ansprüche,
**dadurch gekennzeichnet,**
**dass** auf der Leiterplatte (5) ferner eine gemeinsame Steuereinrichtung (12) für die Radarsensoren (7, 8) vorgesehen ist.

8. Radarsensoreinrichtung nach einem der vorangehenden Ansprüche,
**dadurch gekennzeichnet,**
**dass** die Radarsensoren (7, 8) gleich betreibbar sind, so dass unterschiedliche Detektionseigenschaften durch das Radom (13) definiert werden.

9. Kraftfahrzeug (1), aufweisend wenigstens eine Radarsensoreinrichtung (2) nach einem der Ansprüche 1 bis 8.
